# EUROPÄISCHE PATENTANMELDUNG

(11) **EP 1 961 977 A1**
(43) Veröffentlichungstag der Anmeldung: **27.08.2008**
(21) Anmeldenummer: 07102979.7
(22) Anmeldetag: 23.02.2007
(51) Int. Cl.: F16B 37/04

(54) **Montageelement mit einem Träger und einer in einer Nut des Trägers gehaltenen Hammerkopfschraube sowie zugehörige Hammerkopfschraube**

(71) Anmelder: Guido Berger Produktmanagement GmbH, 33378 Rheda-Wiedenbrück (DE)
(72) Erfinder: Berger, Guido, 33378 Rheda-Wiedenbrück (DE); Hellweg, Wolfgang, 33378 Rheda-Wiedenbrück (DE)
(74) Vertreter: Schmidt, Frank-Michael

(57) **Zusammenfassung**

Ein Montageelement umfasst einen Träger, beispielsweise eine Schiene, und wenigstens eine Schraube (1), die einen in einer Nut des Trägers gehaltenen Hammerkopf (3) und einen an einer Oberseite des Trägers aus der Nut herausragenden Gewindeabschnitt (2) aufweist. Die Nut weist eine Hinterschneidung auf, die der Hammerkopf (3) der Schraube (1) hintergreift, wenn die Schraube in eine Halteposition gedreht ist. An der Schraube ist in einem Abschnitt zwischen dem Hammerkopf (3) und dem Gewindeabschnitt (2) oder in dem Gewindeabschnitt (2) ein Federelement (7) befestigt, das so ausgebildet ist, dass es dann, wenn die Schraube in der Halteposition ist, derart gegen die Oberseite des Trägers drückt, dass der Hammerkopf (3) gegen die Hinterschneidung gezogen wird, so dass die Schraube fixiert, aber noch entlang der Nut verschiebbar ist. Erfindungsgemäß ist das Federelement (7) einstückig ausgebildet und umfasst einen radial von der Schraube (1) abstehenden Federbereich (9), wobei zumindest diejenigen Abschnitte des Federbereichs (9), die gegen die Oberseite des Trägers drükken, in axialer Richtung nachgiebig sind.

## Beschreibung

Die Erfindung betrifft ein Montagelement mit einem Träger und wenigstens einer Schraube, die einen in einer Nut des Trägers gehaltenen Hammerkopf und einen an einer Oberseite des Trägers aus der Nut herausragenden Gewindeabschnitt aufweist, wobei die Nut eine Hinterschneidung aufweist, die der Hammerkopf der Schraube hintergreift, wenn die Schraube in eine Halteposition gedreht ist, wobei an der Schraube in einem Abschnitt zwischen dem Hammerkopf und dem Gewindeabschnitt oder in dem Gewindeabschnitt ein Federelement befestigt ist, das so ausgebildet ist, dass es dann, wenn die Schraube in der Halteposition ist, derart gegen die Oberseite des Trägers drückt, dass der Hammerkopf gegen die Hinterschneidung gezogen wird, so dass die Schraube fixiert, aber noch entlang der Nut verschiebbar ist. Ferner betrifft die Erfindung eine Hammerkopfschraube zur Montage in einer hinterschnittenen Nut, mit einem Hammerkopf, einem Gewindeabschnitt und einem an der Hammerkopfschraube zwischen dem Hammerkopf und dem Gewindeabschnitt oder am Gewindeabschnitt befestigten und in axialer Richtung nachgiebigen Federelement zum Ausüben einer Haltekraft auf ein zwischen dem Hammerkopf und dem Federelement befindliches Bauteil.

Aufgrund der wachsenden Bedeutung von Energieeinsparungsmöglichkeiten sowie der Nutzung umweltfreundlicher Energiegewinnungsmethoden werden zunehmend Photovoltaik-Module auf Gebäudedächern installiert. Bei den Photovoltaik-Modulen handelt es sich beispielsweise um eine Mehrzahl von Solarzellen auf einer Trägerplatte mit entsprechenden elektrischen Anschlüssen. Die Solarzellen wandeln die Lichtenergie direkt in elektrische Energie um. Bei der Aufdach-Montage von Photovoltaik-Modulen ist eine Vielzahl mechanischer Beanspruchungen zu berücksichtigen. Die Module müssen fest und sicher montiert werden, wobei Erschütterungen, Windlasten, thermische Ausdehnung und Alterungsprozesse zu berücksichtigen sind. Üblicherweise werden zunächst eine Anzahl gleichmäßig beabstandeter Trägerprofile auf der Dachfläche befestigt. Die Trägerprofile weisen an ihrer Oberseite C-Profile auf, in die Muttern oder Schraubenköpfe eingeschoben oder eingesetzt werden können, wobei mit den Schraubverbindungen Niederhalter-Elemente befestigt werden, welche wiederum die Photovoltaik-Module halten, das heißt auf die Trägerprofile spannen. Um eine flexible Montage an unterschiedlichen Orten entlang der C-Profile zu ermöglichen, müssen die in C-Profilen aufgenommenen Muttern oder Schraubenköpfe entlang des Profils verschiebbar sein. Aufgrund der Dachmontage und der verwendeten Profillängen sollte ferner vermieden werden, dass die Muttern oder Schraubenköpfe vom Profilende über die gesamte Länge eingeschoben werden müssen. Vielmehr sollten die Muttern oder Schraubenköpfe von oben in das C-Profil einsetzbar sein. Aus den genannten Gründen werden üblicherweise Hammerschrauben oder Hammermuttern verwendet, welche zusätzlich Fixierelemente aufweisen, die die Muttern oder Schraubenköpfe in dem C-Profil fixieren, das heißt verschiebbar festklemmen. Um eine möglichst große Flächenausnutzung der zur Verfügung stehenden Dachfläche zu erzielen, werden die Module eng benachbart montiert, weshalb zwischen den Modulen lediglich ein geringer Spalt für das Festschrauben der Niederhalter verbleibt. Aus diesem Grund müssen die Schrauben für ein Schraubwerkzeug von oben zugänglich sein. Es werden deshalb vorzugsweise Schrauben mit einem Innenprofil, beispielsweise Imbusschrauben, verwendet. Die Befestigung der Photovoltaik-Module ist beispielsweise von Sven Schumann, "Montagegerechte Gestaltung eines Befestigungssystems für Photovoltaikgeneratoren", Dissertation, TU Berlin, Mai 2004, beschrieben.

Zum Fixieren der Hammerkopfschrauben oder -muttern in dem C-Profil nach dem Einsetzen der Schraubenköpfe bzw. Muttern und vor dem Festschrauben der Niederhalter ist es üblich, die Schraubenköpfe oder Muttern mit Hilfe von Federn, welche sich am Boden der C-Nut abstützen, gegen den Schlitz zu pressen. Daneben gibt es auch Muttern, die in dem Schlitz der C-Nut festgeklemmt werden. Die bekannten, durch Federn gehaltenen Hammerkopfschrauben sind relativ teuer, da in einer speziell hergerichteten Aufnahme im Inneren des Schraubenkopfes neben einer Spiralfeder eine von der Spiralfeder nach außen gedrückte Kugel, die auf dem Boden der C-Nut entlanggleiten kann, montiert ist.

Auf dem Gebiet der Montage von Rohrleitungen sind weitere Möglichkeiten zum Fixieren einer Hammerkopfschraube in einer C-Nut einer Trägerschiene bekannt. Beispielsweise beschreibt das Gebrauchsmuster DE 295 13 990 U1 eine Hammerkopfschraube, bei der auf dem Gewindeabschnitt eine Mutter aufgeschraubt und zwischen Mutter und Hammerkopf eine verschiebliche Unterlegscheibe aufgeschoben ist, wobei eine zwischen der Mutter und der Scheibe angeordnete Spiralfeder die Scheibe gegen den Hammerkopf drückt. Beim Einschieben des Hammerkopfes in die C-Nut wird die Scheibe in Richtung der Mutter zurückgeschoben, wobei die Feder zusammengedrückt wird. Die Scheibe stützt sich dabei an der Oberseite des C-Profils ab. Nach dem Verdrehen des Hammerkopfes sorgt die federbelastete Scheibe dafür, dass die der Schraube zugewandten Abschnitte des C-Profils zwischen dem Hammerkopf und der Scheibe eingeklemmt werden. Die bekannte Ausführungsform beansprucht einen erheblichen Bauraum zwischen der Oberseite des C-Profils und dem verbleibenden Abschnitt des Gewindes, an dem beispielsweise eine Rohrschelle befestigt werden kann. Dies stellt aber für die in der Gebrauchsmusterschrift beschriebene Anwendung keinen erheblichen Nahteil dar.

Eine ähnliche Ausführungsform ist in der Offenlegungsschrift DE 100 46 198 A1 beschrieben. Hier wird durch eine spezielle Gestaltung der Feder der Bauraum zwischen dem Hammerkopf und der Mutter verkürzt.

Allerdings stellen alle bekannten Anordnungen zum Fixieren des Hammerkopfs in der C-Nut aufwändige Gestaltungen dar, denn sie umfassen jeweils drei bis vier Bauelemente (Mutter, Spiralfeder, Scheiben) und sind deshalb teuer bei der Herstellung und Montage.

Aufgabe der Erfindung ist es, ein einfaches und preiswertes Mittel zum Fixieren der Montageschraube in einer C-Nut eines auf einem Dach befestigten Trägerprofils für die Montage von Photovoltaik-Modulen zu schaffen.

Diese Aufgabe wird durch ein Montageelement mit den Merkmalen des Anspruchs 1 bzw. eine Hammerkopfschraube mit den Merkmalen des Anspruchs 12 gelöst.

Das Montageelement weist einen Träger und wenigstens eine Schraube auf, wobei die Schraube einen in einer Nut des Trägers gehaltenen Hammerkopf und einen in einer Oberseite des Trägers aus der Nut herausragenden Gewindeabschnitt aufweist. Der Gewindeabschnitt braucht nicht über seine gesamte Länge mit einem Gewinde versehen zu sein; das Gewinde kann auch von der Nut beabstandet beginnen. Die Nut weist eine Hinterschneidung auf, die der Hammerkopf der Schraube hintergreift, wenn die Schraube in eine Halteposition gedreht ist. Die Schraube wird üblicherweise in einer Einführposition in die Nut eingeschoben und anschließend in die Halteposition gedreht. An der Schraube ist in einem Abschnitt zwischen dem Hammerkopf und dem Gewindeabschnitt oder in dem Gewindeabschnitt selbst ein Federelement befestigt, das so ausgebildet ist, dass es dann, wenn die Schraube in der Halteposition ist, derart gegen die Oberseite des Trägers drückt, dass der Hammerkopf gegen die Hinterschneidung gezogen wird, so dass die Schraube fixiert, aber noch entlang der Nut verschiebbar ist. Das Montageelement ist nun erfindungsgemäß dadurch gekennzeichnet, dass das Federelement einstückig ausgebildet ist und einen radial von der Schraube abstehenden Federbereich umfasst, wobei zumindest diejenigen Abschnitte des Federbereichs, die gegen die Oberseite des Trägers drücken, in axialer Richtung nachgiebig sind. Die einstückige Ausbildung ermöglicht ein preiswertes Federelement. Bei den eingangs beschriebenen, bekannten Anordnungen umfasste das Federelement neben der Spiralfeder noch eine Andruckplatte oder eine von der Spiralfeder beaufschlagte Kugel, die gegen einen Boden der C-Nut drückt. Der radial von der Schraube abstehende Federbereich des Federelements kann plattenförmig und eben oder auch zum Hammerkopf hin gewölbt oder abgewinkelt sein. Der Federbereich kann aber auch durch einen elastischen Ringkörper gebildet sein, der sich in einem radial von der Schraube beabstandeten Abschnitt zum Hammerkopf hin vorwölbt; beispielsweise kann der elastische Ringkörper einen O-förmigen Querschnitt aufweisen. Der Federbereich kann aber auch eine dem Hammerkopf zugewandte elastische Schicht umfassen, beispielsweise eine Schaumstoffschicht. Der Ort der Anbringung des Federelements auf dem Schraubenschaft, das heißt der Abstand zum Hammerkopf, ist an die Dicke des zwischen dem Hammerkopf und dem Federelement eingeklemmten Bauteils angepasst.

Der Hammerkopf umfasst üblicherweise zwei vorspringende Bereiche, die die beiden einander gegenüberliegenden Hinterschneidungen einer T-Nut oder C-Nut hintergreifen. Bei einer alternativen Ausführungsform kann der Hammerkopf auch lediglich einseitig ausgebildet sein, wenn die Nut lediglich auf einer Seite eine Hinterschneidung aufweist (L-Nut).

Das Federelement kann beispielsweise in einer radialen Bohrung der Schraube befestigt sein und zwei radial einander gegenüber liegende, nach außen abstehende fingerartige Federplatten umfassen, die sich in der Halteposition der Schraube quer zur Nut erstrecken. Bei einer bevorzugten Ausführungsform umschließt das Federelement die Schraube ringförmig. Beispielsweise ist das Federelement eine die Schraube umschliessende Tellerfeder. Vorzugsweise weist die Schraube eine umlaufende Ringnut auf, in der das umschließende Federelement gehalten wird. Vorzugsweise wird die Schraube mit einer Ringnut oder Ausnehmung an dem dem Hammerkopf zugewandten Ende des Gewindes gefertigt und anschließend die Schraube mit einem Kunststoff-Federelement umspritzt, welches in der Ringnut bzw. in der Ausnehmung verankert ist.

An der Schraube ist vorzugsweise ein in der Halteposition gegen eine Wandung der Nut laufender Anschlag zum Verhindern eines Weiterdrehens angeformt. Dies vereinfacht die Montage. Der Hammerkopf braucht lediglich in die Nut eingeschoben zu werden, wobei das Federelement gespannt wird. Anschließend wird die Schraube so lange gedreht, bis der Anschlag auf eine Wandung der Nut trifft. Bei einer bevorzugten Ausführungsform ist der Anschlag zwischen dem Hammerkopf und dem Federelement angeformt, so dass der Anschlag gegen die Wandung der Nut im Bereich zwischen der Oberseite der Nut und der Hinterschneidung läuft. Bei einer alternativen Ausführungsform kann der Anschlag auch an dem Hammerkopf derart angeformt sein, dass der Anschlag gegen eine Wandung der Nut unterhalb der Hinterschneidung läuft. In diesem Fall kann der Hammerkopf beispielsweise rhombusförmig ausgebildet sein, wobei die außen liegenden Rhombusseiten als Anschlag dienen.

Der bei dem Montageelement verwendete Träger kann beispielsweise eine eine Nut aufweisende Platte sein. Vorzugsweise wird als Träger jedoch eine Schiene mit wenigstens einer in Längsrichtung verlaufenden C-Nut verwendet. Die C-Nut wird zum Teil auch als T-Nut bezeichnet, wobei die erste Bezeichnung auf den Verlauf der Innenwandung und die zweite Bezeichnung auf die Grundform der Nut abhebt.

Bei einer bevorzugten Ausführungsform ist zumindest ein Teil des Gewindeabschnitts der Hammerkopfschraube mit einer reibungserhöhenden Beschichtung versehen, auf der eine Mutter aufgeschraubt ist. Die Reibung zwischen der Mutter und der Schraube ist durch die Beschichtung derart erhöht, dass beim Drehen der Mutter mit einem Werkzeug das auf die Schraube übertragene Drehmoment ausreicht, um den Hammerkopf in die Halteposition zu drehen. Die reibungserhöhende Beschichtung kann alternativ auf der Gewindefläche der Mutter aufgebracht sein. Beispielsweise kann eine von der Firma Kerb-Konus-Vertriebs GmbH unter der Marke "TufLok" angebotene partielle Gewindebeschichtung verwendet werden.

Bei einer bevorzugten Ausführungsform wird die Hammerkopfschraube mit Hammerkopf, Anschlag-Verdrehsicherung, Ringnut zur Aufnahme des Federelements und Gewindeabschnitt in üblicher Weise preiswert aus Metall, insbesondere Stahl, gefertigt und anschließend mit einem Kunststoff-Federelement umspritzt.

Vorteilhafte und/oder bevorzugte Weiterbildungen der Erfindung sind in den Unteransprüchen gekennzeichnet.

Im Folgenden wird die Erfindung anhand bevorzugter Ausführungsformen, welche in den Zeichnungen dargestellt sind, näher beschrieben. In den Zeichnungen zeigen:
Figuren 1A und 1B eine Seitenansicht bzw. eine Schnittansicht einer erfindungsgemäßen Hammerkopfschraube;
Figuren 2A bis 2C verschiedene Ansichten einer in der Halteposition in der Nut einer Trägerschiene fixierten Hammerkopfschraube gemäß Fig. 1;
Figur 3 eine schematische Teilansicht eines mit Hilfe erfindungsgemäßer Hammerkopfschrauben an einer Trägerschiene montierten Photovoltaik-Moduls und
Figuren 4A und 4B schematische Schnittansichten einer weiteren Ausführungsform des erfindungsgemäßen Montageelements mit Trägerschiene und Hammerkopfschraube, wobei Figur 4A die Schiene und die Schraube vor der Montage und Figur 4B die in der Schiene fixierte Schraube zeigt.

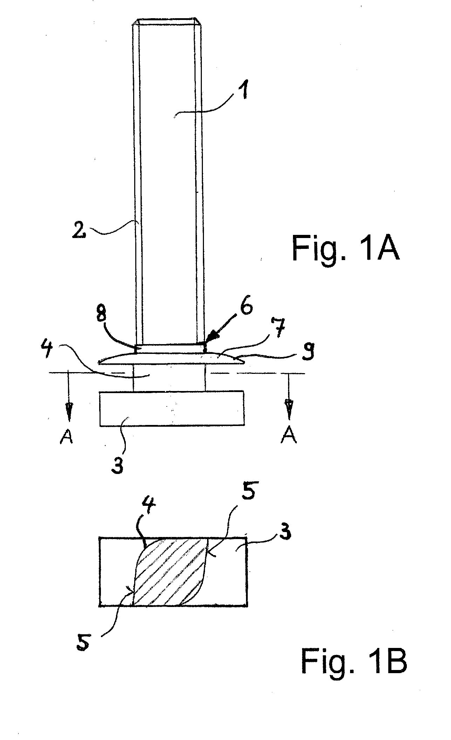

Figur 1A zeigt eine Seitenansicht einer erfindungsgemäßen Hammerkopfschraube 1 mit einem Gewindeabschnitt 2 und einem Hammerkopf 3. Die Schraube 1 weist zwischen dem Gewindeabschnitt 2 und dem Hammerkopf 3 einen Abschnitt 4 auf, der sich im montierten Zustand in dem engen Bereich einer C-Nut (auch T-Nut genannt) befindet.

Figur 1B zeigte eine Schnittansicht, bei der die Schraube 1 im Bereich des Abschnitts 4 geschnitten ist. Man erkennt das Querschnittsprofil des Abschnitts 4 mit den Anschlagflächen 5, die an die Breite der Nut angepaßt sind. Nach dem Einführen des Hammerkopfes 3 durch die Nut und dem Drehen des Schraubenkopfes im Uhrzeigersinn schlagen die Flächen 5 an die Innenflächen der Nut an und verhindern ein Weiterdrehen der Schraube.

Der Hammerkopf ist bei der in den Figuren 1A und 1B dargestellten Schraube mit rechteckigem Querschnitt und einer ebenen Oberseite dargestellt. Es sind aber eine Vielzahl anderer Schraubenkopfformen denkbar, beispielsweise mit einer runden Oberseite und mit abgerundeten Ecken des Querschnitts.

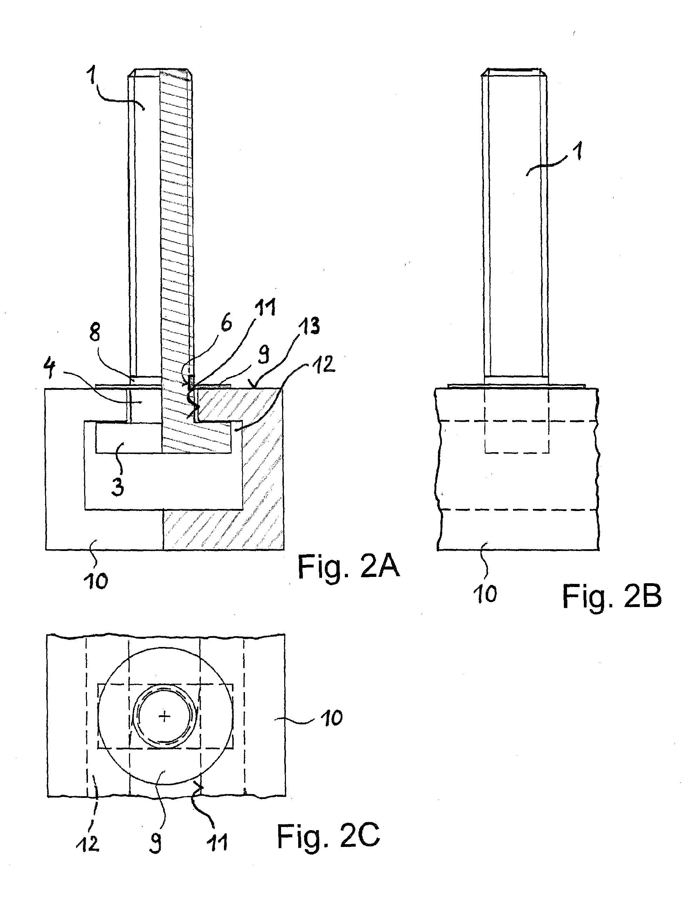

Erfindungsgemäß weist die Hammerkopfschraube 1 zwischen dem Gewindeabschnitt 2 und dem Hammerkopf 3 eine Ausnehmung in Form einer Ringnut 6 auf. Im Bereich der Ringnut 6 ist die Schraube 1 mit einem Kunststoff-Federelement 7 umspritzt. Die Ringnut 6 sorgt für die axiale Festlegung des Federelements 7. Das Federelement 7 besteht aus einem in der Ringnut festgehaltenen Trägerring 8 und einem als radial abstehende Federplatte 9 ausgeführten Federbereich. Bei dem in Figur 1A gezeigten Ausführungsbeispiel ist die Federplatte 9 zum Hammerkopf 3 hin vorgewölbt. Dabei ist der Abstand zwischen der dem Hammerkopf zugewandten Seite der Federplatte und der dem Federelement 7 zugewandten Oberfläche des Hammerkopfes 3 geringfügig geringer als die Dicke des C-Profil-Abschnitts, der zwischen dem Hammerkopf 3 und dem Federelement 7 eingeklemmt werden soll. Beim Einsetzen der Hammerkopfschraube 1 in die Nut des Trägerprofils wird der Hammerkopf in Längsrichtung durch den Schlitz der Nut solange eingeführt, bis die Federplatte 9 des Federelements 7 gespannt ist. Dann wird die Hammerkopfschraube 1 in die Halteposition gedreht, wobei das Federelement 7 gespannt bleibt, und es ergibt sich die in den Figuren 2A bis 2C dargestellte Anordnung.

Um ein Drehen der Schraube bei gleichzeitigem Spannen des Federelements zu erleichtern, kann der Hammerkopf 3 an denjenigen Außenkanten, die beim Drehen zuerst unter die Kante der Hinterschneidung treten, eine Schräge oder Fase aufweisen.

Die Figuren 2A bis 2C zeigen Darstellungen eines Abschnitts eines Trägerprofils 10 mit einer Nut 11, in der eine Hammerkopfschraube 1 gemäß Fig. 1 fixiert ist.

Figur 2A zeigt eine Seitenansicht auf die Stirnseite des Profils 10, wobei die rechte Hälfte in der Mitte der Schraube geschnitten dargestellt ist. Die Hammerkopfschraube 1 befindet sich in der Halteposition, in der der Hammerkopf 3 Hinterschneidungen 12 der Nut 11 hintergreift. Gleichzeitig ist die Federplatte 9 aus ihrer Ruheposition vom Hammerkopf 3 weg ausgelenkt und drückt auf die Oberseite 13 des Trägerprofils 10. Bei den schematischen Darstellungen gemäß den Figuren 2A bis 2C ist die Federplatte 9 derart verformt dargestellt, daß sie als ebene Scheibe erscheint. Es ist aber auch denkbar, daß die Verformung geringer ist und die Federplatte 9 auch in der Halteposition der Hammerkopfschraube 1 noch gewölbt ist.

Figur 2B zeigt eine Seitenansicht der in der Halteposition in dem Trägerprofil 10 fixierten Hammerkopfschraube 1 und Figur 2C zeigt eine Draufsicht, in der man die als Tellerfeder ausgebildete Federplatte 9 gut erkennen kann.

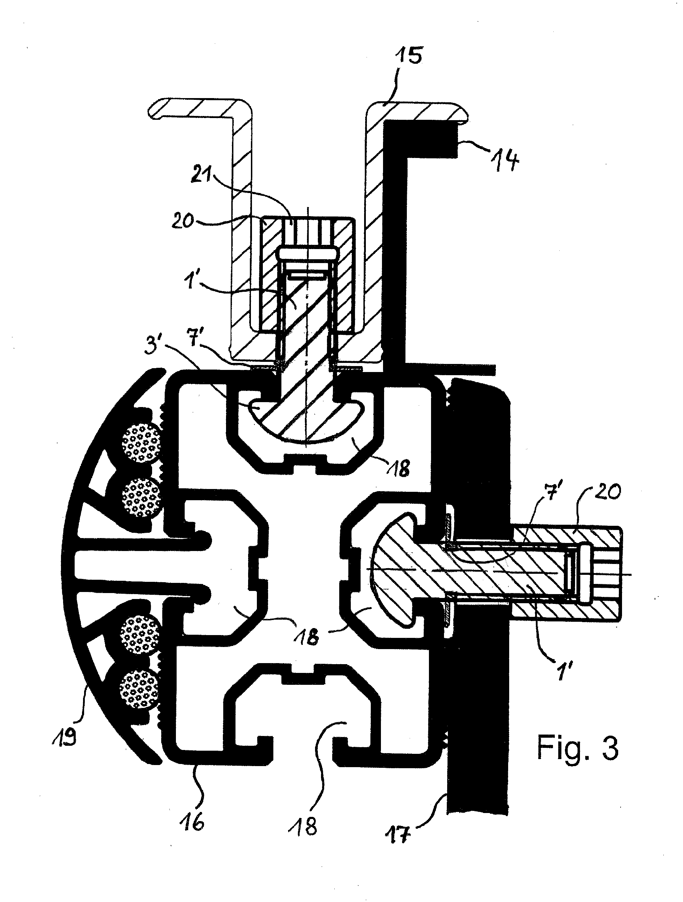

Figur 3 zeigt einen Abschnitt einer Anordnung, bei der ein Photovoltaik-Modul 14 mit Hilfe eine Niederhalters 15 auf einem Trägerprofil 16 befestigt und das Trägerprofil 16 an einer Halterung 17, welche beispielsweise auf einem Dach befestigt ist, montiert ist. Von dem Photovoltaik-Modul 14, welches eine rechteckige Platte darstellt, ist lediglich ein Teil einer Seitenkante dargestellt. Sowohl der Niederhalter 15 als auch die Halterung 17 sind mittels Hammerkopfschrauben-Verbindungen in Nuten 18 des Trägerprofils 16 montiert. Das Trägerprofil 16 weist vier C-Nuten auf, von denen eine zur Befestigung der Halterung 17, eine zum Befestigen des Niederhalters 15 und eine zur Aufnahme einer Einsteckblende 19 dient und eine unbelegt ist.

Die Hammerkopfschrauben 1' weisen Rundkopf-Hammerköpfe 3' auf. Zwischen dem Gewindeabschnitt und dem Hammerkopf 3' befindet sich einer Ringnut der Schraube 1' das erfindungsgemäße Federelement 7' mit einer radial abstehenden Federplatte (Tellerfeder). Auf dem Gewindeabschnitt der Hammerkopfschraube 1' ist eine Hutmutter 20 aufgeschraubt, welche auf ihrer Hutoberseite ein eingesenktes Innenprofil für eine Werkzeugeingriff aufweist, beispielsweise ein Sechskant-Innenprofil (Imbus) oder ein sternförmiges Innenprofil (beispielsweise Schüco).

Vorzugweise werden zur Montage der Photovoltaik-Module 14 auf dem Trägerprofil 16 Montageelemente vormontiert geliefert. Die vormontierten Montageelemente umfassen jeweils eine in einem Niederhalter 15 eingesteckte Hammerkopfschraube 1' mit einer aufgesetzten Hutmutter 20. Hierbei ist der Teil des Gewindeabschnitts der Hammerkopfschraube 1', auf dem die Hutmutter vormontiert ist, mit einer reibungserhöhenden Beschichtung versehen (alternativ kann auch das Innengewinde der Hutmutter 20 mit der Beschichtung versehen sein). Zur Montage des Niederhalters 15 wird ein Werkzeug in das Innenprofil 21 der Hutmutter 20 eingesteckt, der Niederhalter 15 mit der vormontierten Hammerkopfschraube 1' auf das Trägerprofil 16 aufgesetzt, der Hammerkopf 3' in die Nut eingeführt, so daß das Federelement 7' gespannt wird und die Hutmutter 20 gedreht, wobei die reibungserhöhende Beschichtung dafür sorgt, daß die Hammerkopfschraube 1' soweit mitgedreht wird, daß der Hammerkopf 3' die Hinterschneidungen der Nut 18 hintergreift und die (in Figur 3 nicht dargestellten) Anschlagflächen an Innenflächen der Nut 18 anschlagen. Dann befindet sich das vormontierte Montageelement in einer fixierten Position, in der es aber noch entlang der Nut 18 verschoben werden kann. Hat der Niederhalter 15 seine endgültige Halteposition erreicht, so wird die Hutmutter 20 festgezogen.

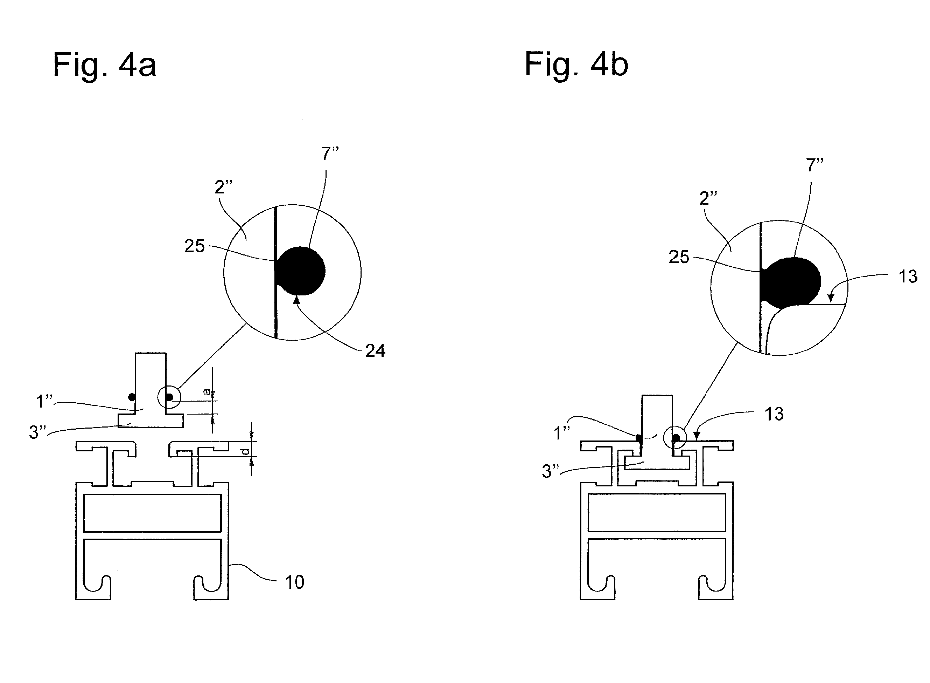

Die Figuren 4A und 4B zeigen schematische Schnittansichten eines weiteren Ausführungsbeispiels des erfindungsgemäßen Montageelements mit einer Trägerschiene 10 und einer Hammerkopfschraube 1". Figur 4A zeigt eine Schnittansicht der Trägerschiene 10 und darüber eine Schnittansicht der Hammerkopfschraube 1" vor deren Montage in der Trägerschiene 10. Figur 4B zeigt die Schnittansicht einer in der C-Nut fixierten Hammerkopfschraube. Nicht dargestellt sind der Niederhalter, der anschließend aufgesetzt werden kann, und die auf die Hammerkopfschraube 1" aufschraubbare Hutmutter.

Bei dieser weiteren, besonders einfachen Ausführungsform wird das Federelement durch einen auf den Gewindeabschnitt 2" (oder auch zwischen dem Gewindeabschnitt und dem Hammerkopf auf die Schraubenoberfläche) aufgeklebten Ring aus einem elastischen Material mit einem O-förmigen Querschnitt gebildet. Der O-Ring 7" aus elastischem Material wird einfach auf die herkömmliche Hammerkopfschraube 1" aufgeschoben und an einer vorgegebenen Position mit einem Klebstoff befestigt. In der vorgegebenen Position ist der Abstand a zwischen der dem Hammerkopf 3" zugewandten unteren Begrenzung 24 des O-Rings 7" und der Oberseite des Hammerkopfs 3" geringer als die Dicke d des zwischen dem O-Ring und dem Hammerkopf einzuklemmenden Profilabschnitts des Trägerprofils 10. Die Differenz zwischen dem Abstand a und der Dicke d entspricht dem Verformungsweg beim Verformen des O-Rings 7" während des Einsetzens des Schraubenkopfs und Drehens in die Halteposition. Eine schematische vergrößerte Darstellung der Deformation des O-Rings 7" in der Halteposition ist in Figur 4B gezeigt. Der O-Ring 7" ist auf der Schraube 1" so festgeklebt, daß sich die Klebeverbindung 25 auch in der Halteposition noch oberhalb der Oberseite 13 des Trägerprofils 10 befindet.

In Abhängigkeit von den zu erwartenden Maßtoleranzen der Hammerkopfschraube und des Trägerprofils 10, insbesondere der Dickentoleranzen der Dicke d, werden der Durchmesser des O-Profils und die Elastizität des verwendeten Materials des O-Rings 7" gewählt. Je geringer die Maßtoleranzen und je genauer der O-Ring auf der Schraube positioniert (festgeklebt) werden kann, desto kleiner kann der Durchmesser des O-Profils gewählt werden.

## Patentansprüche

1. Montageelement mit einem Träger (10; 16) und wenigstens einer Schraube (1; 1'), die einen in einer Nut (11; 18) des Trägers (10; 16) gehaltenen Hammerkopf (3; 3') und einen an einer Oberseite (13) des Trägers (10; 16) aus der Nut (11; 18) herausragenden Gewindeabschnitt (2) aufweist, wobei die Nut (11; 18) eine Hinterschneidung (12) aufweist, die der Hammerkopf (3; 3') der Schraube (1; 1') hintergreift, wenn die Schraube (1; 1') in eine Halteposition gedreht ist,
wobei an der Schraube (1; 1') in einem Abschnitt zwischen dem Hammerkopf (3; 3') und dem Gewindeabschnitt (2) oder in dem Gewindeabschnitt (2) ein Federelement (7; 7') befestigt ist, das so ausgebildet ist, daß es dann, wenn die Schraube (1; 1') in der Halteposition ist, derart gegen die Oberseite (13) des Trägers (10; 16) drückt, daß der Hammerkopf (3; 3') gegen die Hinterschneidung (12) gezogen wird, so daß die Schraube (1; 1') fixiert, aber noch entlang der Nut (11; 18) verschiebbar ist,
**dadurch gekennzeichnet,**
**daß** das Federelement (7; 7') einstückig ausgebildet ist und
**daß** das Federelement (7; 7') einen radial von der Schraube (1; 1') abstehenden Federbereich (9) umfaßt, wobei zumindest diejenigen Abschnitte des Federbereichs (9), die gegen die Oberseite (13) des Trägers (10; 16) drücken, in axialer Richtung nachgiebig sind.

2. Montageelement nach Anspruch 1, **dadurch gekennzeichnet, daß** das Federelement (7; 7') die Schraube (1; 1') ringförmig umschließt.

3. Montageelement nach Anspruch 2, **dadurch gekennzeichnet, daß** der radial abstehende Federbereich (9) als Federplatte ausgebildet ist.

4. Montageelement nach Anspruch 3, **dadurch gekennzeichnet, daß** das Federelement (7; 7') eine die Schraube (1; 1') umschließende Tellerfeder ist.

5. Montageelement nach Anspruch 2, **dadurch gekennzeichnet, daß** das Federelement (7; 7') ein Ring aus einem elastischen Material mit einem O-förmigen Querschnitt ist.

6. Montageelement nach einem der Ansprüche 1 - 5, **dadurch gekennzeichnet, daß** die Schraube (1; 1') eine umlaufende Ringnut (6) aufweist, in der das Federelement (7; 7') gehalten wird.

7. Montageelement nach einem der Ansprüche 1 - 6, **dadurch gekennzeichnet, daß** an der Schraube (1; 1') ein in der Halteposition gegen eine Wandung der Nut laufender Anschlag (5) zum Verhindern eines Weiterdrehens angeformt ist.

8. Montageelement nach Anspruch 7, **dadurch gekennzeichnet, daß** der Anschlag (5) zwischen dem Hammerkopf (3; 3') und dem Federelement (7; 7') angeformt ist, so daß der Anschlag (5) gegen die Wandung der Nut (11) zwischen der Oberseite (13) und der Hinterschneidung (12) läuft.

9. Montageelement nach einem der Ansprüche 1 - 8, **dadurch gekennzeichnet, daß** der Träger eine Schiene (10; 16) mit wenigstens einer in Längsrichtung verlaufenden C-Nut (11; 18) ist.

10. Montageelement nach einem der Ansprüche 1 - 9, **dadurch gekennzeichnet, daß** zumindest ein Teil des Gewindeabschnitts (2) eine reibungserhöhende Beschichtung aufweist, auf der eine Mutter (20) aufgeschraubt ist.

11. Montageelement nach Anspruch 10, **dadurch gekennzeichnet, daß** die Mutter eine Hutmutter (20) mit einem auf der Hutoberseite eingesenkten Innenprofil (21) für einen Werkzeugeingriff ist.

12. Hammerkopfschraube zur Montage in einer hinterschnittenen Nut, mit einem Hammerkopf (3; 3'), einem Gewindeabschnitt (2) und einem an der Hammerkopfschraube (1; 1') zwischen dem Hammerkopf (3; 3') und dem Gewindeabschnitt (2) oder am Gewindeabschnitt (2) befestigten und in axialer Richtung nachgiebigen Federelement (7; 7') zum Ausüben einer Haltekraft auf ein zwischen dem Hammerkopf (3; 3') und dem Federelement (7; 7') befindliches Bauteil,
**dadurch gekennzeichnet,**
**daß** das Federelement (7; 7') einstückig ausgebildet ist und
**daß** das Federelement (7; 7') einen radial von der Hammerkopfschraube (3; 3') abstehenden Federbereich (9) umfaßt,
wobei zumindest die radial außen liegenden Abschnitte des Federbereichs (9) in axialer Richtung nachgiebig sind.

13. Hammerkopfschraube nach Anspruch 12, **dadurch gekennzeichnet, daß** der Federbereich (9) als Federplatte ausgebildet ist.

14. Hammerkopfschraube nach Anspruch 13, **dadurch gekennzeichnet, daß** die Federplatte (9) derart geformt ist, daß ihre radial außen liegenden Bereiche sich in axialer Richtung dem Hammerkopf (3; 3') annähern.

15. Hammerkopfschraube nach einem der Ansprüche 12 bis 14, **dadurch gekennzeichnet, daß** das Federelement (7; 7') die Schraube ringförmig umschließt.

16. Hammerkopfschraube nach Anspruch 15, **dadurch gekennzeichnet, daß** das Federelement (7; 7') eine die Schraube umschließende Tellerfeder ist.

17. Hammerkopfschraube nach Anspruch 16, **dadurch gekennzeichnet, daß** die Tellerfeder kalottenförmig oder kegelförmig zum Hammerkopf hin gewölbt ist.

18. Hammerkopfschraube nach Anspruch 12, **dadurch gekennzeichnet, daß** das Federelement (7; 7') ein Ring aus einem elastischen Material mit einem O-förmigen Querschnitt ist.

19. Hammerkopfschraube nach einem der Ansprüche 12 - 18, **gekennzeichnet durch** eine umlaufende Ringnut (6), in der das Federelement (7; 7') axial festgelegt ist.

20. Hammerkopfschraube nach einem der Ansprüche 12 - 19, **dadurch gekennzeichnet, daß** sie aus Metall besteht und das Federelement (7; 7') ein an der Metallschraube (1; 1') angeformtes Kunststoffbauteil ist.

21. Hammerkopfschraube nach einem der Ansprüche 12 - 20, **dadurch gekennzeichnet, daß** ein gegen eine Wandung der Nut laufender Anschlag (5) zum Verhindern eines Weiterdrehens angeformt ist.

22. Hammerkopfschraube nach Anspruch 21, **dadurch gekennzeichnet, daß** der Anschlag (5) zwischen dem Hammerkopf (3; 3') und dem Federelement (7; 7') angeformt ist.

23. Hammerkopfschraube nach Anspruch 21, **dadurch gekennzeichnet, daß** der Anschlag an dem Hammerkopf derart angeformt ist, daß der Anschlag gegen eine Wandung der Nut unterhalb der Hinterschneidung läuft.

24. Hammerkopfschraube nach einem der Ansprüche 12 - 23, **dadurch gekennzeichnet, daß** zumindest ein Teil des Gewindeabschnitts eine reibungserhöhende Beschichtung aufweist.
